# EUROPEAN PATENT SPECIFICATION

(11) **EP 3 772 148 B1**
(45) Date of publication and mention of the grant of the patent: **02.09.2026**
(21) Application number: 20188470.7
(22) Date of filing: 29.07.2020
(51) Int. Cl.: H02J 1/10, H02J 1/12, H02J 1/14, H02J 3/00, H02J 4/00

(54) **HYBRID ELECTRIC POWER DISTRIBUTION AND CONTROL FOR AN AIRCRAFT**
HYBRIDSTROMVERTEILUNG UND -STEUERUNG FÜR EIN FLUGZEUG
DISTRIBUTION D'ÉNERGIE ÉLECTRIQUE HYBRIDE ET COMMANDE POUR UN AÉRONEF

(30) Priority: 29.07.2019 US 201916524752; 14.08.2019 US 201962886609 P; 19.09.2019 US 201916575707
(43) Date of publication of application: 03.02.2021
(73) Proprietor: RTX Corporation, Farmington, CT 06032 (US)
(72) Inventor: BAIG, Zubair Ahmed, South Windsor, CT 06074 (US); BENGEA, Sorin, 3001 Leuven (BE); MILES, Gary L, Stillman Valley, IL 61084 (US)
(74) Representative: Dehns

(56) References cited:
- US-A1- 2016 070 266
- US-A1- 2016 105 030
- US-A1- 2016 204 615
- US-A1- 2016 236 790
- US-A1- 2018 041 028
- US-A1- 2019 006 867
- SEOK JINWOO ET AL: "Coordinated Model Predictive Control of Aircraft Gas Turbine Engine with Simplified Electrical System Model", 2018 ANNUAL AMERICAN CONTROL CONFERENCE (ACC), AACC, 27 June 2018 (2018-06-27), pages 1460 - 1466, XP033387661, DOI: 10.23919/ACC.2018.8431504
- DONATEO T ET AL: "Development and validation of a software tool for complex aircraft powertrains", ADVANCES IN ENGINEERING SOFTWARE, ELSEVIER SCIENCE, OXFORD, GB, vol. 96, 2 February 2016 (2016-02-02), pages 1 - 13, XP029495831, ISSN: 0965-9978, DOI: 10.1016/J.ADVENGSOFT.2016.01.001
- LUK PATRICK CHI-KWONG: "Superconducting machines - The enabling technology for future electric propulsion in aircraft", 2017 7TH INTERNATIONAL CONFERENCE ON POWER ELECTRONICS SYSTEMS AND APPLICATIONS - SMART MOBILITY, POWER TRANSFER & SECURITY (PESA), IEEE, 12 December 2017 (2017-12-12), pages 1 - 7, XP033310524, DOI: 10.1109/PESA.2017.8277766
- NI KAI ET AL: "Electrical and Electronic Technologies in More-Electric Aircraft: A Review", IEEE ACCESS, vol. 7, 1 January 2019 (2019-01-01), pages 76145 - 76166, XP011731786, DOI: 10.1109/ACCESS.2019.2921622

## Description

### BACKGROUND

Exemplary embodiments pertain to aircraft systems, and more particularly to systems and methods of controlling a hybrid electric power distribution for an aircraft.

Aircraft, such as those utilized by commercial airlines, typically include two or more gas turbine engines. The engines generate thrust, propelling the aircraft forward and allowing operation of the aircraft. A typical engine utilized in this configuration includes a fan forward of a turbine engine core, with the turbine engine core driving the rotation of the fan either via a direct drive system or a geared connection. Some aircraft propulsion systems also include one or more electric motors and/or generators to provide a supplemental power source under certain aircraft operating conditions.

Systems for energy storage are disclosed in US2016/105030 A1, US2016/236790 A1, a paper by SEOK JINWOO ET AL: "Coordinated Model Predictive Control of Aircraft Gas Turbine Engine with Simplified Electrical System Model", 2018 ANNUAL AMERICAN CONTROL CONFERENCE (ACC), AACC, 27 June 2018 (2018-06-27), pages 1460-1466, XP033387661 and a paper by LUK PATRICK CHI-KWONG: "Superconducting machines - The enabling technology for future electric propulsion in aircraft", 2017 7TH INTERNATIONAL CONFERENCE ON POWER ELECTRONICS SYSTEMS AND APPLICATIONS - SMART MOBILITY, POWER TRANSFER & SECURITY (PESA), IEEE, 12 December 2017 (2017-12-12), pages 1-7, XP033310524.

### BRIEF DESCRIPTION

Disclosed is a power system of an aircraft, where the power system includes a hybrid energy storage system with at least two energy storage subsystems each having a different power-energy density, power draw characteristics and/or dissimilar configuration. The power system also includes a primary power unit including an aircraft engine coupled to an electric motor and a first generator, and a secondary power unit coupled to a second generator. The power system also includes a bidirectional power converter coupled to the hybrid energy storage system and one or more controllers of the electric motor, the first generator, and the second generator. A power management controller is configured to interface with the hybrid energy storage system and the one or more controllers of the electric motor, the first generator, and the second generator and perform a model predictive control to dynamically adjust one or more electric power flows through the bidirectional power converter based on an engine propulsion power demand of the aircraft engine and perform predictive power management by predictively closing one or more contactors based on load predictions for the one or more electric power flows prior to a needed delivery of power, wherein the one or more contactors have a switching or settling time delay.

In addition to one or more of the features described above or below, or as an alternative, further embodiments may include where the power management controller is operable to detect one or more conditions of the at least two energy storage subsystems and configure the one or more electric power flows.

The system may include where the power management controller is operable to configure at least one of the one or more electric power flows from a first energy storage subsystem of the at least two energy storage subsystems to charge a second energy storage subsystem of the at least two energy storage subsystems.

The system may include where the first energy storage subsystem includes a battery system and a battery management system, the second energy storage subsystem includes a super/ultra-capacitor, and the bidirectional power converter is operably coupled to the super/ultra-capacitor and the battery management system.

The system may include where the hybrid energy storage system includes a third energy storage system with an isolated battery pack accessible by the power management controller based on determining that a mode of operation of the aircraft is a ground-based mode of operation or an emergency power mode of operation.

The system may include where a plurality of aircraft electrical subsystems is operably coupled to the bidirectional power converter and the power management controller is configured to extract power from or provide power to the aircraft electrical subsystems, and the model predictive control can be further based on one or more aircraft subsystem power demands.

The system may include where the aircraft electrical subsystems include one or more of an engine subsystem, an aircraft low-voltage DC subsystem, an aircraft high-voltage DC subsystem, and an aircraft AC subsystem.

The system may include where the power management controller is operable to monitor a state of charge of the hybrid energy storage system, a power request of an engine subsystem control of the engine subsystem, an aircraft subsystem control, and the one or more controllers of the electric motor, the first generator, and the second generator.

The system may include where the power management controller is operable to determine a current status and constraints from the engine subsystem control, the aircraft subsystem control, and the one or more controllers of the electric motor, the first generator, and the second generator. The engine propulsion power demand and data from a plurality of engine sensors can be received. A plurality of desired values can be determined for electrical power levels. The desired values for electrical power levels can be communicated to the engine subsystem control, the aircraft subsystem control, and the one or more controllers of the electric motor, the first generator, and the second generator.

The system may include where the model predictive control determines the electrical power levels by computing a plurality of future step values using a plurality of dynamic equations that model a plurality of subsystems, the current status and constraints, and an objective function based on an error between a requested and an allocation power level or thrust.

Also disclosed is a method that includes interfacing a power management controller with a hybrid energy storage system and one or more controllers of an electric motor, a first generator, and a second generator, where the hybrid energy storage system includes at least two energy storage subsystems each having a different power-energy density and power draw characteristics, and the electric motor and the first generator are coupled to an aircraft engine of a primary power unit and the second generator is coupled to a secondary power unit. The power management controller receives an engine propulsion power demand for the aircraft engine. A model predictive control is performed to dynamically adjust one or more electric power flows through a bidirectional power converter based on the engine propulsion power demand and perform predictive power management by predictively closing one or more contactors based on load predictions for the one or more electric power flows prior to a needed delivery of power, where the one or more contactors have a switching or settling time delay, and where the bidirectional power converter is coupled to the hybrid energy storage system and one or more controllers of the electric motor, the first generator, and the second generator.

The method may include detecting one or more conditions of the at least two energy storage subsystems, and configuring the one or more electric power flows based on the one or more conditions of the at least two energy storage subsystems.

The method may include configuring at least one of the one or more electric power flows from a first energy storage subsystem of the at least two energy storage subsystems to charge a second energy storage subsystem of the at least two energy storage subsystems.

The method may include determining a current status and constraints from the engine subsystem control, the aircraft subsystem control, and the one or more controllers of the electric motor, the first generator, and the second generator; receiving the engine propulsion power demand and data from a plurality of engine sensors; determining a plurality of desired values for electrical power levels; and communicating the desired values for electrical power levels to the engine subsystem control, the aircraft subsystem control, and the one or more controllers of the electric motor, the first generator, and the second generator.

The method may include determining the electrical power levels by computing a plurality of future step values using a plurality of dynamic equations that model a plurality of subsystems, the current status and constraints, historical energy consumption, and an objective function based on an error between a requested and an allocation power level or thrust.

A technical effect of systems and methods is achieved by providing hybrid electric power distribution for an aircraft as described herein.

### BRIEF DESCRIPTION OF THE DRAWINGS

The following descriptions should not be considered limiting in any way. With reference to the accompanying drawings, like elements are numbered alike:
FIG. 1 is a schematic illustration of a gas turbine engine in accordance with an embodiment of the disclosure;
FIG. 2 is a schematic illustration of a power system in accordance with an embodiment of the disclosure;
FIG. 3 is a schematic illustration of the power system of FIG. 2 in greater detail in accordance with an embodiment of the disclosure;
FIG. 4 is a schematic illustration of a control system in accordance with an embodiment of the disclosure; and
FIG. 5 is a flow chart illustrating a method in accordance with an embodiment of the disclosure.

### DETAILED DESCRIPTION

A detailed description of one or more embodiments of the disclosed apparatus and method are presented herein by way of exemplification and not limitation with reference to the Figures.

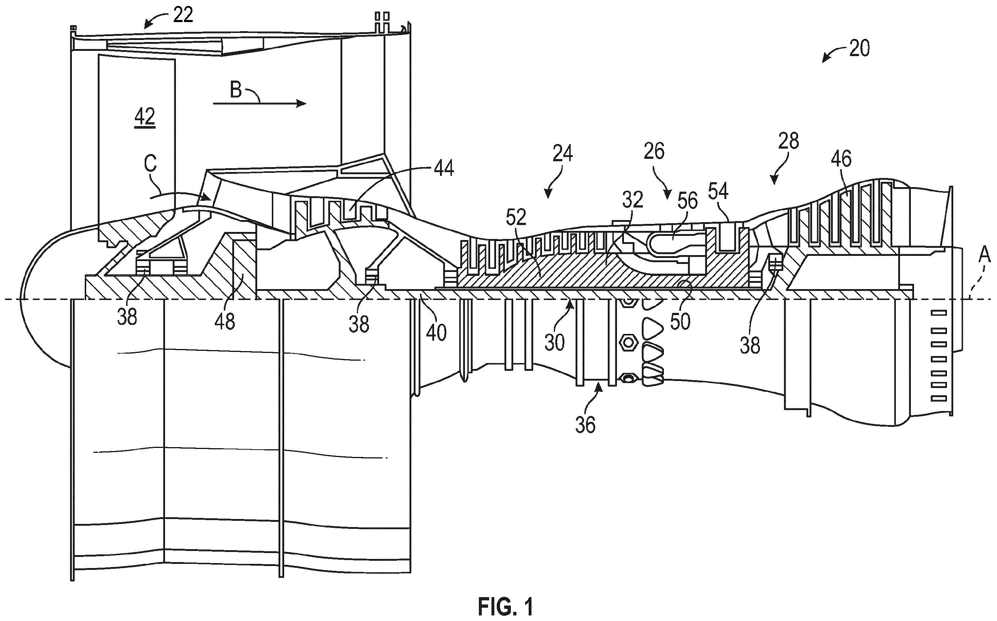

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5: 1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8 Mach and about 35,000 feet (10,668 meters). The flight condition of 0.8 Mach and 35,000 ft (10,668 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

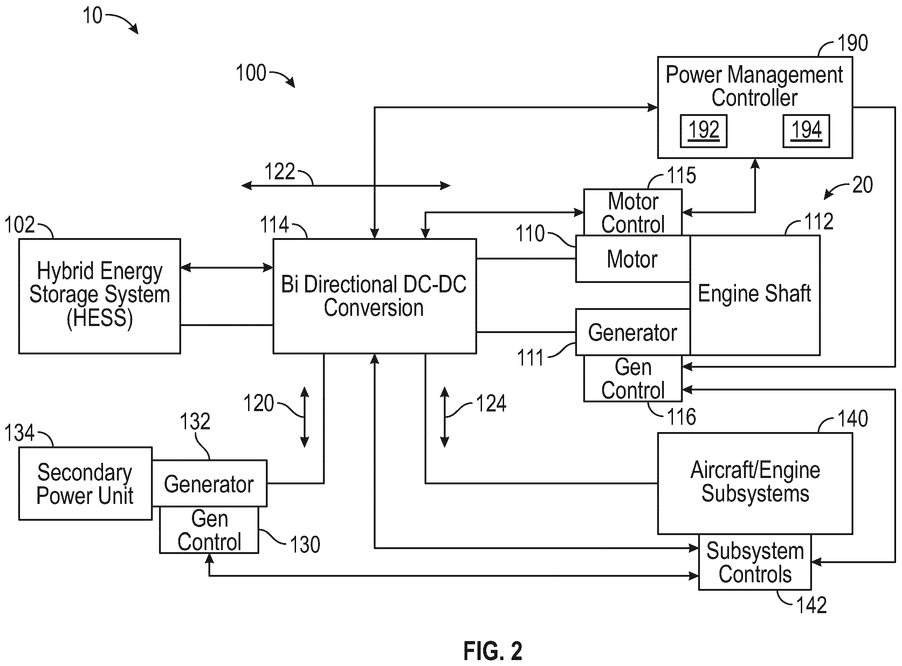

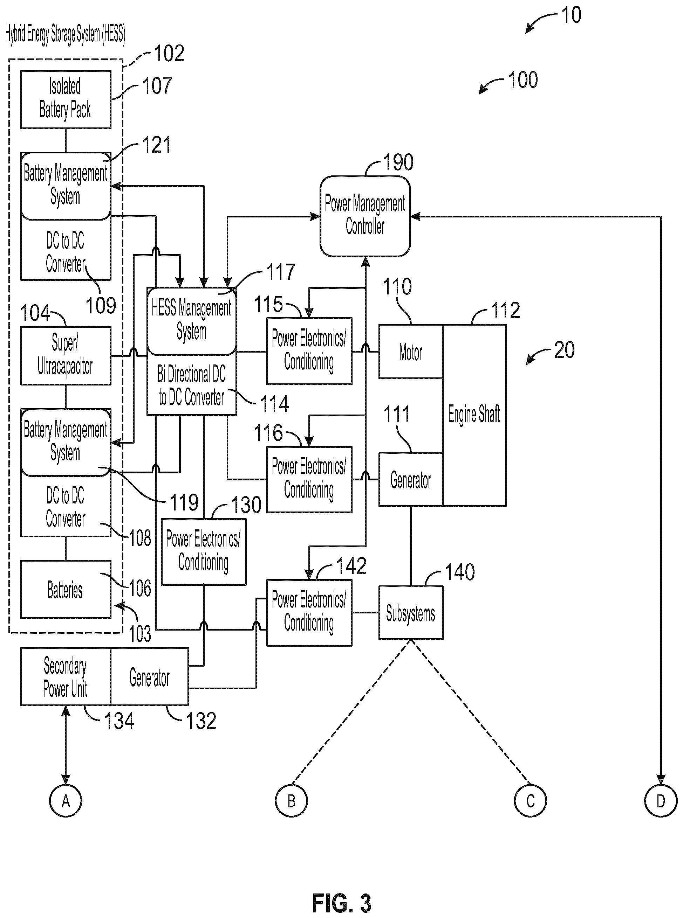

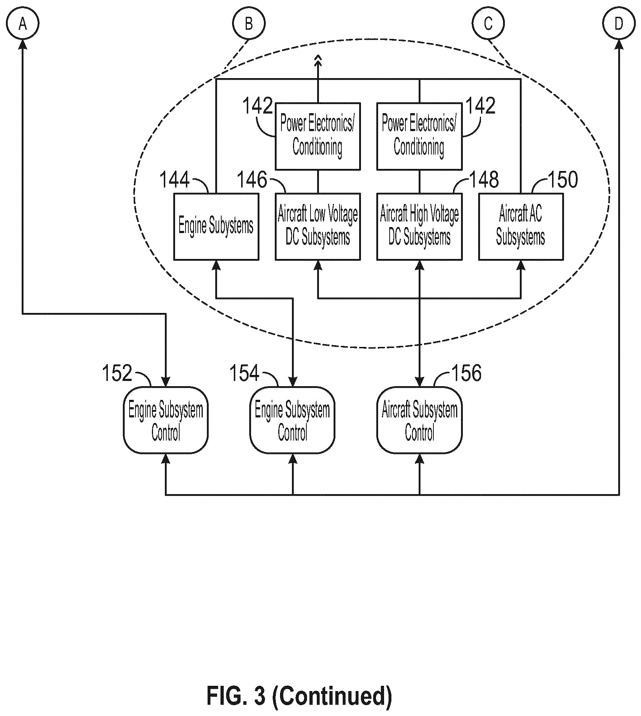

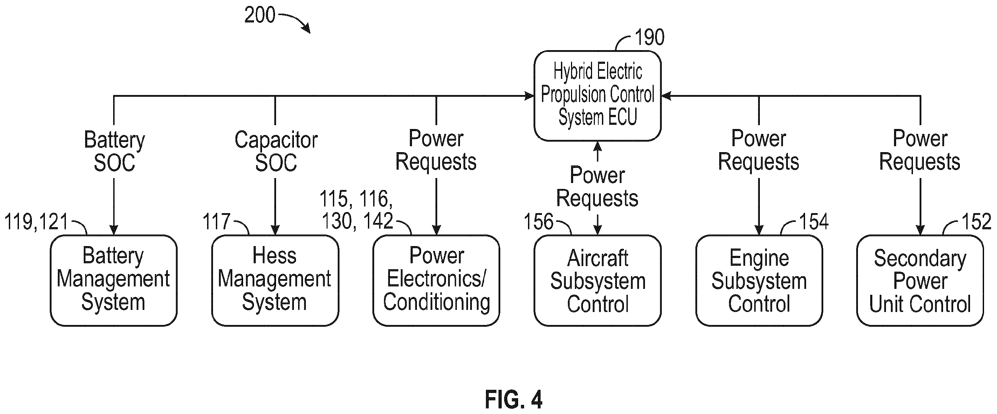

FIGS. 2 and 3 depict a power system 100 of an aircraft 10 that includes the gas turbine engine 20 of FIG. 1 (also referred to generally as an aircraft engine) according to an embodiment. The power system 100 can include a hybrid energy storage system 102 with at least two energy storage subsystems 103 (FIG. 4) each having a different power-energy density, power draw characteristics and/or dissimilar configuration/architecture to meet various types of power demands and fault protection with backup power sources. In the example of FIG. 3, the at least two energy storage subsystems 103 include a super/ultra-capacitor 104 and a battery system 106. The hybrid energy storage system 102 may be sized to store energy to support transient bursts of the gas turbine engine 20 for a power assist during a snap acceleration or power shedding during a snap deceleration. Using only the battery system 106 for a wide range of acceleration and deceleration conditions may result in oversizing battery capacity with corresponding additional weight carried to meet potential transient demands. The super/ultra-capacitor 104 provides a lower storage capacity than the battery system 106 but has a higher charge/discharge rate as compared to the battery system 106. The super/ultra-capacitor 104 can be comprised of one or more electrochemical double layer capacitors (EDLCs) or electrochemical capacitors that have a high energy density when compared to common capacitors, e.g., several orders of magnitude greater than a high-capacity electrolytic capacitor. The super/ultra-capacitor 104 can have higher energy efficiency due to a lower internal resistance than the battery system 106. The super/ultra-capacitor 104 can be operatively coupled to the battery system 106 through a direct current (DC)-to-DC converter 108. The DC-to-DC converter 108 can convert a voltage level of the battery system 106 to match a voltage level of the super/ultra-capacitor 104 to support charging of the super/ultra-capacitor 104 by the battery system 106. In alternate embodiments, the DC-to-DC converter 108 can be omitted where regulation between the super/ultra-capacitor 104 and the battery system 106 is not needed.

The battery system 106 is an example of a first energy storage subsystem, and the super/ultra-capacitor 104 is an example of a second energy storage system. The hybrid energy storage system 102 can also include a third energy storage system that includes an isolated battery pack 107 accessible by the power management controller 190 based on determining that a mode of operation of the aircraft 10 is a ground-based mode of operation or an emergency power mode of operation. The emergency power mode can use the isolated battery pack 109 to provide power through a DC-to-DC converter 109 to other elements of the power system 100, for instance, in place of a ram-air turbine.

In embodiments, an electric motor 110 and a first generator 111 are operably coupled to at least one shaft 112 of an aircraft engine, such as the inner shaft 40 of low speed spool 30 or the outer shaft 50 of high speed spool 32 of the gas turbine engine 20 of FIG. 1, which may also be referred to as a primary power unit. In the example of FIGS. 2 and 3, the hybrid energy storage system 102 is operably coupled to a bidirectional power converter 114 (e.g., a bidirectional DC-to-DC converter) which is operably coupled to a motor controller 115 (also referred to as power conditioning electronics 115) and a first generator controller 116 (also referred to as power conditioning electronics 116). The motor controller 115 interfaces with the electric motor 110, and the first generator controller 116 interfaces with the first generator 111. The bidirectional power converter 114 also interfaces with the power management controller 190, for instance, through a hybrid energy storage system management system 117 of the bidirectional power converter 114. Further, the bidirectional power converter 114 can interface with a second generator controller 130 (also referred to as power conditioning electronics 130) of a second generator 132 of a secondary power unit 134. The secondary power unit 134 can be a heat engine or any type of power generating device operable to drive rotation of the second generator 132. A plurality of aircraft electrical subsystems 140 is operably coupled to the bidirectional power converter 114, and the power management controller 190 is configured to extract power from or provide power to the aircraft electrical subsystems 140 through subsystem controls 142 (also referred to as power conditioning electronics 142). The aircraft electrical subsystems 140 can include one or more of an engine subsystem 144, an aircraft low-voltage DC subsystem 146, an aircraft high-voltage DC subsystem 148, and an aircraft AC subsystem 150. The power management controller 190 is operable to monitor a state of charge of the hybrid energy storage system 102, a power request of an engine subsystem control 152 of the secondary power unit 134, an engine subsystem control 154 of the engine subsystem 144, an aircraft subsystem control 156, and the one or more controllers 115, 116, 130 of the electric motor 115, the first generator 111, and the second generator 132.

The bidirectional power converter 114 can perform any voltage conversions needed between elements of the power system 100. Although only one bidirectional power converter 114 is depicted, it will be understood that multiple bidirectional power converters can be incorporated in the power system 100 and that reference to the bidirectional power converter 114 can include one or more bidirectional power converters within the power system 100. The power conditioning electronics 115, 116, 130, 142 can include inverter/motor drive circuitry that applies known motor control techniques to control the speed and/or torque produced by one or more of the electric motor 110, first generator 111, and second generator 132. For example, during a snap acceleration, electric power from the hybrid energy storage system 102 is provided through the bidirectional power converter 114 and the power conditioning electronics 115 to drive the electric motor 110 in a motor mode to supplement rotation of the engine shaft 112 as opposed by an engine load. The engine load on the engine shaft 112 can vary depending upon a flight regime and accessory loading from generators, environmental control systems, engine bleeds, and other known loading factors. During a snap deceleration, the first generator 111 can be used to increase the engine load on the engine shaft 112, with resulting current passed through the bidirectional power converter 114 for storage in the hybrid energy storage system 102 or used elsewhere within the power system 100. The hybrid energy storage system management system 117 of the bidirectional power converter 114 can be operably coupled to a battery management system 119 of the DC-to-DC converter 108 and/or to a battery management system 121 to control and manage the battery system 106 and isolated battery pack 107 respectively. The battery management systems 119, 121 can provide local status information such as a state of charge or health of the battery system 106 and isolated battery pack 107. Isolation can prevent the isolated battery pack 107 from being drained in unintended modes of operation.

In embodiments, the power management controller 190 can provide a means for controlling one or more electric power flows of the hybrid energy storage system 102 to/from the one or more electric motor 110, first generator 111, second generator 132, and aircraft electrical subsystems 140 based on a modeled electric power demand of an engine load of the aircraft engine that may be at a current time step or predicted at one or more future time steps, for example. The power management controller 190 (also referred to as controller 190) is operable to detect one or more conditions of the super/ultra-capacitor 104 and the battery system 106 and configure the one or more electric power flows between the hybrid energy storage system 102 and other elements of the power system 100. Detectable conditions can include a current charge level, a remaining storage capacity, health/fault status, and other such information. Further, the conditions may be derived based on environmental factors, previous usage data or aging effects. For example, if a temperature of the battery system 106 impacts the storage capacity and/or charge/discharge rate, then such information can be determined in assessing the condition of the battery system 106.

The power management controller 190 can interface with and control multiple elements of the power system 100 and the gas turbine engine 20, such as switches, current sensors, voltage sensors, temperature sensors, communication buses, and the like. In an embodiment, the power management controller 190 includes a memory system 192 to store instructions that are executed by a processing system 194 of the power management controller 190. The executable instructions may be stored or organized in any manner and at any level of abstraction, such as in connection with a controlling and/or monitoring operation of the power system 100 and/or the gas turbine engine 20. The processing system 194 can include one or more processors that can be any type of central processing unit (CPU), including a microprocessor, a digital signal processor (DSP), a microcontroller, an application specific integrated circuit (ASIC), a field programmable gate array (FPGA), or the like. Also, in embodiments, the memory system 192 may include random access memory (RAM), read only memory (ROM), or other electronic, optical, magnetic, or any other computer readable medium onto which is stored data and control algorithms in a non-transitory form. Other controllers of FIGS. 2 and 3 can include similar elements.

Various electric power flows 120, 122, 124 can be bidirectionally controlled to shift energy between elements of the power system 100. Selection and timing for engaging the various electric power flows 120-124 can be controlled by the power management controller 190. As one example, the power management controller 190 may be implemented as a predictive controller or other model-based control as further described in reference to FIG. 4.

In the example of FIG. 4 with continued reference to FIGS. 1-3, a control system 200 of the power system 100 can include the power management controller 190 includes a model-based control, such as a model predictive control, operable to output one or more electric power flow control signals. Predictive power management can include dynamically reading status of each of the power source and predicting what loads will be required to proactively optimize power flows, such as closing contactors predictively to enable an optimal power flow with reduced delays. As an example, a delay between requesting power and delivering power can exist where contactors or other components have a switching or settling time delay. By predictively closing contactors or commanding other such state changes prior to a needed delivery of power, system responsiveness can be enhanced. The power management controller 190 can include models with maps, equations, and the like that relate voltage, current, electrical power, and state-of-charge, for example. The system-level control algorithm integrates the models associated with each subsystem and includes their respective constraints. The electric motor(s) can be modeled as Tₘₒₜₒᵣ = Fₘₒₜₒᵣ(Iₚₕₐₛₑ, V, N_{shaft}) where the function can be an equation, a look-up table, a map that relates the currents in all the motor phases, the voltage, and the shaft rotational speed to generated motor torque. Several constraints are defined and included in the overall control problem definition. These are related to motor torque, T_{motor, min} ≤Tₘₒₜₒᵣ≤T_{motor, max}, shaft angular speed, N_{shaft, min} ≤N_{shaft}≤N_{shaft, max}. Similarly, a model F_{generator}(Iₚₕₐₛₑ, V, N_{shaft}) and constraints T_{generator, min} ≤T_{generator}≤T_{generator, max} are defined for the generator(s). Additional parameters can also be incorporated in motor torque modeling, such as loads, back-electromagnetic field effects, and other such electrical and mechanical parameters. The phase currents that control the motor torque can be generated by a motor drive/inverter and related to the direct current through another set of equations, Iₚₕₐₛₑ = Fᵢₙᵥ(V, I_{DC}, N_{shaft}), where Fᵢₙᵥ could be a set of equations, maps or look-up tables. The direct current, I_{DC}, depends upon the current provided by the ultra-capacitor or supercapacitor I_{DC, UC} and/or the current supplied by the batteries, I_{DC, Bat}, and needs to be bounded I_{DC, min} ≤I_{DC}≤I_{DC, max} (with the positive upper bound active during discharging, and the negative, lower bound active during charging). Each of the current depends on the state-of-charge and state-of-health of the ultra-capacitor and battery system, I_{DC,UC}=F_{I,UC}(SOC_{UC}, V, mode) and I_{DC,Bat}=F_{I,Bat}(SOC_{Bat}, V, mode). The state-of-charge and state-of-health are dynamical states that are interrelated and depend on the current supplied by each storage subsystem. Because they have different dynamics depending on whether they are charging or discharging the functions that relate current, SOC, SOH are specific to each mode of operation. In order to ensure that the batteries continue to operate correctly for many charging-discharging cycles, the two key parameters are bounded: SOC_{Bat,min}≤SOC_{Bat}≤SOC_{Bat,max} and SOH_{Bat,min}≤SOH_{Bat}. All the models mentioned above and their associated constraints are lumped into an integrated, dynamical system-level model dX_{Sys} = F_{sys}(X_{Sys}, mode) and constraints X_{Sys, min}≤X_{Sys}≤X_{Sys,max}. The objective in controlling the hybrid energy storage system is to meet the requested shaft torque; a cost function that penalizes the errors between the motor torque T_{Motor} and the requested shaft torque T_{Shaft,Req} can be used ∫[ T_{Motor}(t)- T_{Shaft,Req}(t)]dt, where the integral is calculated at each time step over a receding horizon [0, Dt], assuming that the requested motor torque is known over this time interval. The motor torque request can be set based on various external conditions such as: shaft speed and acceleration; overall system operating condition. The optimization problem including the defined cost function, system dynamics and constraints has as control inputs the current supplied by the battery system and modes of operation (charging, discharging) for each subsystem, and it is therefore a mixed-integer programming problem which can be solved numerically by using customized solvers. Additionally, monitoring input power and integrating over time to obtain energy consumption provides a high-level monitor on battery or super/ultra-capacitor capacity consumed as a model input for continuing power draw or charging functions.

Elements such as the super/ultra-capacitor 104 can be modeled using observed conditions and a physics-based model that incorporates sizing parameters, for example, to determine predicted charge time, discharge time, capacity, available charge, and other such information. Similarly, the battery system 106 and/or isolated battery pack 107 of FIG. 2 can be modeled using observed conditions and a physics-based model that incorporates sizing parameters, for example, to determine predicted charge time, discharge time, capacity, available charge, and other such information. An engine system model may model an engine load on the engine shaft 112 presently and at one or more future time steps. The engine system model may receive engine parameters from an engine control or flight computer system (not depicted) that assist with load predictions. The load predictions can include flight regime (e.g., idle, takeoff, climb, cruise, decent, thrust reverse, etc.) along with demands due to known loads and operating status of other propulsion system elements (e.g., operational status of other engines on the aircraft). The power flow control signals can control switching states and times of elements within the power system 100.

As one example, at each computational time step, the model-based control receives information about current engine loading and an engine load over one or more future time steps from the engine system model. The model-based control can access the super/ultra-capacitor model and the battery system model with corresponding power constraints to determine power profiles for the super/ultra-capacitor 104 and the battery system 106 and/or isolated battery pack 107 such that a power demand is met. Constraints can include healthy values, rates, and/or ranges for associated parameters. For instance, if a power demand exceeds the modeled capability of the battery system 106, then electric power can be provided by the super/ultra-capacitor 104. After the super/ultra-capacitor 104 is discharged, the power management controller 190 can perform recharging from the battery system 106. As another example, the power demand can be initially met by the battery system 106, but upon exceeding the power demand provided by battery system 106, additional power can be provided by the super/ultra-capacitor 104 via the second electric power flow 122. In some embodiments, time-based analysis selects either or both of the super/ultra-capacitor 104 and the battery system 106, for instance, by determining current demand and charge/discharge rates and capacity.

Examples of equations, limits and constraints that can be implemented in embodiments include the follow: ${min}_{Wf , {T}_{m 1} , {T}_{m 2} , {T}_{g 1} , {T}_{g 2} , {VV}_{LPC} , {VV}_{HPC}} {\int }_{{t}_{0}}^{{t}_{0} + T} \left\{{w}_{1}⋅{\left({Thrust}_{Ref}-{Thrust}_{HEP}\right)}^{2}+{w}_{2}⋅{W}_{f}+{w}_{3}⋅{Life}_{Index}+{w}_{4}{\left({PH}_{HPC , Ref}-{PR}_{HPC}\right)}^{2}\right\}$
Subject to limit constraints ${W}_{f , min} \leq {W}_{f} \leq {W}_{f , max} ; {\dot{W}}_{f , min} \leq {\dot{W}}_{f} \leq {\dot{W}}_{f , max}$ ${T}_{m 1 , min} \leq {T}_{m 1} \leq {T}_{m 1 , max} ; {\dot{T}}_{m 1 , min} \leq {\dot{T}}_{m 1} \leq {\dot{T}}_{m 1 , max}$ ${P}_{Bat , min} \leq {P}_{Bat} \leq {P}_{Bat , max} ; {SOC}_{Bat , min} \leq {SOC}_{Bat} \leq {SOC}_{Bat , max}$ ${P}_{UC , min} \leq {P}_{UC} \leq {P}_{UC , max} ; {SOC}_{UC , min} \leq {SOC}_{UC} \leq {SOC}_{UC , max}$ ${PR}_{HPC} \leq {PR}_{HPC , max} \left({W}_{c , HPC}\right) ; {PR}_{LPC} \leq {PR}_{LPC , max} \left({W}_{c , LPC}\right) ;$ and similarly for all other effectors
Subject to model constraints ${\dot{x}}_{Eng} = {F}_{Eng} \left({x}_{Eng}, {W}_{f}, {T}_{m 1}, {T}_{m 2}, {T}_{g 1}, {T}_{g 2}, {VV}_{LPC}, {VV}_{HPC}\right)$ ${T}_{m 1} = {F}_{m 1} \left({x}_{M 1}, {P}_{E , m 1}\right) {P}_{E , g 1} = {F}_{g 1} \left({x}_{g 1}, {T}_{g 1}\right)$ ${T}_{m 2} = {F}_{m 2} \left({x}_{M 2}, {P}_{E , m 2}\right) {P}_{E , g 2} = {F}_{g 2} \left({x}_{g 2}, {T}_{g 2}\right)$

This is an example of a finite-horizon optimization objective function, where the solution to the problem is [W_{f}, Tₘ₁, Tₘ₂, T_{g1}, T_{g2}, VV_{LPC}, VV_{HPC}], which provides a minimal value of the integral expression if the effector choices are used over a t₀ + *T* time horizon. The T values under the min statement and in the constraints can represent torque values. Using torque from an electrical system can enable integration synergistically with a control for an electrical powertrain based on torque-current relationships. W_{f} can be a fuel flow. VV can be variable vane values (e.g., vane positions for low pressure compressor (LPC) and high pressure compressor (HPC)). Constraints can include power (P), pressure ratio (PR), state of charge (SOC), temperatures, motor parameters (m1, m2), component life, weights (w1, w2, w3, w4), and other such factors.

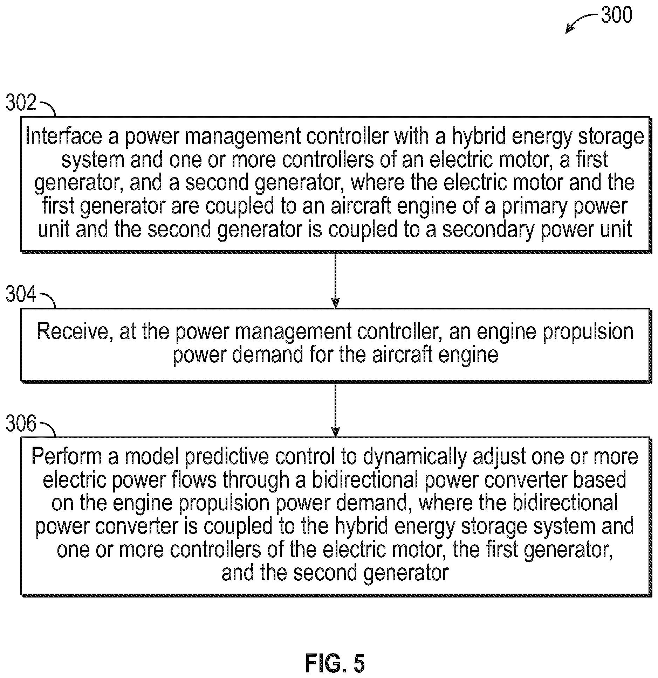

FIG. 5 is a flow chart illustrating a method 300 of controlling a power system 100 of an aircraft 10 in accordance with an embodiment. The method 300 of FIG. 5 is described in reference to FIGS. 1-5 and may be performed with an alternate order and include additional steps. The method 300 can be performed, for example, by the power system 100 of FIGS. 2-3 or an alternate configuration.

At block 302, power management controller 190 can interface with a hybrid energy storage system 102 and one or more controllers 115, 116, 130 of an electric motor 110, a first generator 111, and a second generator 132, where the hybrid energy storage system 102 includes at least two energy storage subsystems 103 each having a different power-energy density, and the electric motor 110 and the first generator 111 are coupled to an aircraft engine 20 of a primary power unit and the second generator 132 is coupled to a secondary power unit 134. At block 304, power management controller 190 can receive an engine propulsion power demand for the aircraft engine 20. At block 306, the power management controller 190 can perform a model predictive control to dynamically adjust one or more electric power flows 120-124 through a bidirectional power converter 114 based on the engine propulsion power demand, where the bidirectional power converter 114 is coupled to the hybrid energy storage system 102 and one or more controllers 115, 116, 130 of the electric motor 110, the first generator 111, and the second generator 132.

In embodiments, the power management controller 190 can detect one or more conditions of the at least two energy storage subsystems 103, such as the super/ultra-capacitor 104 and the battery system 106 and configure the one or more electric power flows 120-124 based on the one or more conditions of the super/ultra-capacitor 104 and the battery system 106. For example, the power management controller 190 can configure at least one of the one or more electric power flows 120-124 from a first energy storage subsystem of the at least two energy storage subsystems 103 to charge a second energy storage subsystem of the at least two energy storage subsystem 103, such as from the battery system 106 through a DC-to-DC converter 108 to charge the super/ultra-capacitor 104. The hybrid energy storage system 102 can include a third energy storage system having an isolated battery pack 107 accessible by the power management controller 190 based on determining that a mode of operation of the aircraft is a ground-based mode of operation or an emergency power mode of operation. Limiting availability to access power of the isolated battery pack 107 to certain operating conditions ensures that power is available after mission completion (e.g., e-taxi on ground) or if needed in an emergency where other electrical power is lost. A plurality of aircraft electrical subsystems 140 can be operably coupled to the bidirectional power converter 114, and the power management controller 190 can be configured to extract power from or provide power to the aircraft electrical subsystems 140. The aircraft electrical subsystems 140 can include one or more of an engine subsystem 144, an aircraft low-voltage DC subsystem 146, an aircraft high-voltage DC subsystem 148, and an aircraft AC subsystem 150. In embodiments, model predictive control can be based on one or more aircraft subsystem power demands of the aircraft electrical subsystems 140. The power management controller 190 can be operable to monitor a state of charge of the hybrid energy storage system 102, a power request of an engine subsystem control 154 of the engine subsystem 144, an aircraft subsystem control 154, and the one or more controllers 115, 116, 130 of the electric motor 110, the first generator 111, and the second generator 132.

In some embodiments, the power management controller 190 is operable to determine a current status and constraints from the engine subsystem control 154, the aircraft subsystem control 156, and the one or more controllers 115, 116, 130 of the electric motor 110, the first generator 111, and the second generator 132. The power management controller 190 can receive the engine propulsion power demand and data from a plurality of engine sensors and determine a plurality of desired values for electrical power levels. The power management controller 190 can communicate the desired values for electrical power levels to the engine subsystem control 154, the aircraft subsystem control 156, and the one or more controllers of the electric motor, the first generator, and the second generator. The model predictive control 190 can determine the electrical power levels by computing a plurality of future step values using a plurality of dynamic equations that model a plurality of subsystems, the current status and constraints, and an objective function based on an error between a requested and an allocation power level or thrust.

In some embodiments, the power management controller 190 is operable to predictively switch horsepower extractions from the gas turbine engine 20 to source power from the hybrid energy storage system 102 instead of the gas turbine engine 20.

Power transfers may be achieved by one or more automatic bus transfers (ABT). Further, if additional bus power is needed, an uninterruptable power supply (UPS) may be used to enhance electric bus stiffness.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A power system (100) of an aircraft, the power system comprising:
a hybrid energy storage system (102) comprising at least two energy storage subsystems (103) each having a different power-energy density, power draw characteristics and/or dissimilar configuration;
a primary power unit comprising an aircraft engine (20) coupled to an electric motor (110) and a first generator (111);
a secondary power unit (134) coupled to a second generator (132);
a bidirectional power converter (114) coupled to the hybrid energy storage system and one or more controllers (115, 117, 130) of the electric motor, the first generator, and the second generator; and
a power management controller (190) configured to interface with the hybrid energy storage system and the one or more controllers of the electric motor, the first generator, and the second generator and perform a model predictive control to dynamically adjust one or more electric power flows (120, 122, 124) through the bidirectional power converter based on an engine propulsion power demand of the aircraft engine and perform predictive power management by predictively closing one or more contactors based on load predictions for the one or more electric power flows (120, 122, 124) prior to a needed delivery of power, wherein the one or more contactors have a switching or settling time delay.

2. The power system of claim 1, wherein the power management controller (190) is operable to detect one or more conditions of the at least two energy storage subsystems (103) and configure the one or more electric power flows (120, 122, 124).

3. The power system of claim 2, wherein the power management controller (190) is operable to configure at least one of the one or more electric power flows (120, 122, 124) from a first energy storage subsystem of the at least two energy storage subsystems to charge a second energy storage subsystem of the at least two energy storage subsystems (103).

4. The power system of claim 3, wherein the first energy storage subsystem comprises a battery system (106) and a battery management system (119), the second energy storage subsystem comprises a super/ultra-capacitor (104), and the bidirectional power converter (114) is operably coupled to the super/ultra-capacitor and the battery management system.

5. The power system of claim 3 or 4, wherein the hybrid energy storage system (102) comprises a third energy storage system comprising an isolated battery pack (109) accessible by the power management controller (190) based on determining that a mode of operation of the aircraft is a ground-based mode of operation or an emergency power mode of operation.

6. The power system of any preceding claim, wherein a plurality of aircraft electrical subsystems (140) is operably coupled to the bidirectional power converter (114) and the power management controller (190) is configured to extract power from or provide power to the aircraft electrical subsystems, and the model predictive control is further based on one or more aircraft subsystem power demands, optionally
wherein the aircraft electrical subsystems comprise one or more of an engine subsystem (144), an aircraft low-voltage DC subsystem (146), an aircraft high-voltage DC subsystem (148), and an aircraft AC subsystem (150).

7. The power system of claim 6, wherein the power management controller (190) is operable to monitor a state of charge of the hybrid energy storage system (102), a power request of an engine subsystem control (154) of an engine subsystem (144), an aircraft subsystem control (156), and the one or more controllers (115, 116, 130) of the electric motor (110), the first generator (111), and the second generator (132).

8. The power system of claim 7, wherein the power management controller (190) is operable to:
determine a current status and constraints from the engine subsystem control (154), the aircraft subsystem control (156), and the one or more controllers (115, 116, 130) of the electric motor (110), the first generator (111), and the second generator (132);
receive the engine propulsion power demand and data from a plurality of engine sensors;
determine a plurality of desired values for electrical power levels; and
communicate the desired values for electrical power levels to the engine subsystem control, the aircraft subsystem control, and the one or more controllers of the electric motor, the first generator, and the second generator, optionally
wherein the model predictive control determines the electrical power levels by computing a plurality of future step values using a plurality of dynamic equations that model a plurality of subsystems, the current status and constraints, and an objective function based on an error between a requested and an allocation power level or thrust.

9. A method (300) comprising:
interfacing (302) a power management controller (190) with a hybrid energy storage system (102) and one or more controllers (115, 116, 130) of an electric motor (110), a first generator (111), and a second generator (132), wherein the hybrid energy storage system comprises at least two energy storage subsystems (103) each having a different power-energy density and power draw characteristics, and the electric motor and the first generator are coupled to an aircraft engine (20) of a primary power unit and the second generator is coupled to a secondary power unit;
receiving, (304) at the power management controller, an engine propulsion power demand for the aircraft engine; and
performing (306) a model predictive control to dynamically adjust one or more electric power flows (120, 122, 124) through a bidirectional power converter based (114) on the engine propulsion power demand and perform predictive power management by predictively closing one or more contactors based on load predictions for the one or more electric power flows (120, 122, 124) prior to a needed delivery of power, wherein the one or more contactors have a switching or settling time delay, and wherein the bidirectional power converter is coupled to the hybrid energy storage system (102) and one or more controllers (115, 116, 130) of the electric motor (110), the first generator (111), and the second generator (132).

10. The method of claim 9, further comprising:
detecting one or more conditions of the at least two energy storage subsystems (103); and
configuring the one or more electric power flows (120, 122, 124) based on the one or more conditions of the at least two energy storage subsystems.

11. The method of claim 10, further comprising:
configuring at least one of the one or more electric power flows (120, 122, 124) from a first energy storage subsystem of the at least two energy storage subsystems (120, 122, 124) to charge a second energy storage subsystem of the at least two energy storage subsystems.

12. The method of claim 11, wherein the first energy storage subsystem comprises a battery system (106) and a battery management system (119), the second energy storage subsystem comprises a super/ultra-capacitor (104), and the bidirectional power converter (114) is operably coupled to the super/ultra-capacitor and the battery management system, optionally
wherein the hybrid energy storage system (102) comprises a third energy storage system comprising an isolated battery pack (109) accessible by the power management controller (190) based on determining that a mode of operation of the aircraft is a ground-based mode of operation or an emergency power mode of operation.

13. The method of any one of claims 9 to 12, wherein a plurality of aircraft electrical subsystems (140) is operably coupled to the bidirectional power converter (114) and the power management controller (190) is configured to extract power from or provide power to the aircraft electrical subsystems, and the model predictive control is further based on one or more aircraft subsystem power demands, optionally
wherein the aircraft electrical subsystems (140) comprise one or more of an engine subsystem (144), an aircraft low-voltage DC subsystem (146), an aircraft high-voltage DC subsystem (148), and an aircraft AC subsystem (150).

14. The method of claim 13, wherein the power management controller (190) is operable to monitor a state of charge of the hybrid energy storage system (102), a power request of an engine subsystem control of an engine subsystem (144), an aircraft subsystem control (156), and the one or more controllers (115, 116, 130) of the electric motor (110), the first generator (111), and the second generator (132).

15. The method of claim 14, further comprising:
determining a current status and constraints from the engine subsystem control, the aircraft subsystem control (156), and the one or more controllers (115, 116, 130) of the electric motor (110), the first generator (111), and the second generator (132);
receiving the engine propulsion power demand and data from a plurality of engine sensors;
determining a plurality of desired values for electrical power levels; and
communicating the desired values for electrical power levels to the engine subsystem control, the aircraft subsystem control, and the one or more controllers of the electric motor, the first generator, and the second generator, optionally
further comprising:
determining the electrical power levels by computing a plurality of future step values using a plurality of dynamic equations that model a plurality of subsystems, the current status and constraints, historical energy consumption, and an objective function based on an error between a requested and an allocation power level or thrust.

## Patentansprüche

1. Leistungssystem (100) eines Luftfahrzeugs, wobei das Leistungssystem umfasst:
ein hybrides Energiespeichersystem (102), das mindestens zwei Energiespeichersubsysteme (103) umfasst, die jeweils eine unterschiedliche Leistungs-Energie-Dichte, unterschiedliche Leistungsaufnahmecharakteristiken und/oder eine unähnliche Konfiguration aufweisen;
eine primäre Leistungseinheit, die ein Luftfahrzeugtriebwerk (20) umfasst, das mit einem Elektromotor (110) und einem ersten Generator (111) gekoppelt ist;
eine sekundäre Leistungseinheit (134), die mit einem zweiten Generator (132) gekoppelt ist;
einen bidirektionalen Leistungswandler (114), der mit dem hybriden Energiespeichersystem und einer oder mehreren Steuerungen (115, 117, 130) des Elektromotors, des ersten Generators und des zweiten Generators gekoppelt ist; und
eine Leistungsmanagementsteuerung (190), die dazu konfiguriert ist, eine Schnittstelle mit dem hybriden Energiespeichersystem und der einen oder den mehreren Steuerungen des Elektromotors, des ersten Generators und des zweiten Generators zu bilden und eine modellprädiktive Regelung durchzuführen, um einen oder mehrere elektrische Leistungsflüsse (120, 122, 124) durch den bidirektionalen Leistungswandler auf der Grundlage eines Antriebsleistungsbedarfs des Luftfahrzeugtriebwerks dynamisch anzupassen, und ein prädiktives Leistungsmanagement durchzuführen, indem sie einen oder mehrere Schütze auf der Grundlage von Lastvorhersagen für den einen oder die mehreren elektrischen Leistungsflüsse (120, 122, 124) vor einer benötigten Leistungsabgabe vorausschauend schließt, wobei der eine oder die mehreren Schütze eine Schalt- oder Einschwingzeitverzögerung aufweisen.

2. Leistungssystem nach Anspruch 1, wobei die Leistungsmanagementsteuerung (190) dazu betreibbar ist, einen oder mehrere Zustände der mindestens zwei Energiespeichersubsysteme (103) zu erkennen und den einen oder die mehreren elektrischen Leistungsflüsse (120, 122, 124) zu konfigurieren.

3. Leistungssystem nach Anspruch 2, wobei die Leistungsmanagementsteuerung (190) dazu betreibbar ist, mindestens einen des einen oder der mehreren elektrischen Leistungsflüsse (120, 122, 124) von einem ersten Energiespeichersubsystem der mindestens zwei Energiespeichersubsysteme dazu zu konfigurieren, ein zweites Energiespeichersubsystem der mindestens zwei Energiespeichersubsysteme (103) aufzuladen.

4. Leistungssystem nach Anspruch 3, wobei das erste Energiespeichersubsystem ein Batteriesystem (106) und ein Batteriemanagementsystem (119) umfasst, das zweite Energiespeichersubsystem einen Super-/Ultrakondensator (104) umfasst und der bidirektionale Leistungswandler (114) mit dem Super-/Ultrakondensator und dem Batteriemanagementsystem wirkgekoppelt ist.

5. Leistungssystem nach Anspruch 3 oder 4, wobei das hybride Energiespeichersystem (102) ein drittes Energiespeichersystem umfasst, das einen isolierten Batteriepack (109) umfasst, auf den die Leistungsmanagementsteuerung (190) auf der Grundlage einer Feststellung zugreifen kann, dass ein Betriebsmodus des Luftfahrzeugs ein bodengestützter Betriebsmodus oder ein Notstrom-Betriebsmodus ist.

6. Leistungssystem nach einem der vorhergehenden Ansprüche, wobei eine Mehrzahl von elektrischen Luftfahrzeugsubsystemen (140) mit dem bidirektionalen Leistungswandler (114) wirkgekoppelt ist und die Leistungsmanagementsteuerung (190) dazu konfiguriert ist, den elektrischen Luftfahrzeugsubsystemen Leistung zu entnehmen oder ihnen Leistung bereitzustellen, und wobei die modellprädiktive Regelung ferner auf einem oder mehreren Leistungsbedarfen von Luftfahrzeugsubsystemen basiert, optional
wobei die elektrischen Luftfahrzeugsubsysteme eines oder mehrere von einem Triebwerkssubsystem (144), einem Niederspannungs-Gleichstromsubsystem (146) eines Luftfahrzeugs, einem Hochspannungs-Gleichstromsubsystem (148) eines Luftfahrzeugs und einem Wechselstromsubsystem (150) eines Luftfahrzeugs umfassen.

7. Leistungssystem nach Anspruch 6, wobei die Leistungsmanagementsteuerung (190) dazu betreibbar ist, einen Ladezustand des hybriden Energiespeichersystems (102), eine Leistungsanforderung einer Triebwerkssubsystemsteuerung (154) eines Triebwerkssubsystems (144), eine Luftfahrzeugsubsystemsteuerung (156) und die eine oder die mehreren Steuerungen (115, 116, 130) des Elektromotors (110), des ersten Generators (111) und des zweiten Generators (132) zu überwachen.

8. Leistungssystem nach Anspruch 7, wobei die Leistungsmanagementsteuerung (190) dazu betreibbar ist:
einen aktuellen Status und Einschränkungen aus der Triebwerkssubsystemsteuerung (154), der Luftfahrzeugsubsystemsteuerung (156) und der einen oder den mehreren Steuerungen (115, 116, 130) des Elektromotors (110), des ersten Generators (111) und des zweiten Generators (132) zu ermitteln;
den Antriebsleistungsbedarf des Triebwerks und Daten von einer Mehrzahl von Triebwerkssensoren zu empfangen;
eine Mehrzahl von Sollwerten für elektrische Leistungspegel zu ermitteln; und
die Sollwerte für elektrische Leistungspegel an die Triebwerkssubsystemsteuerung, die Luftfahrzeugsubsystemsteuerung und die eine oder die mehreren Steuerungen des Elektromotors, des ersten Generators und des zweiten Generators zu übermitteln, optional
wobei die modellprädiktive Regelung die elektrischen Leistungspegel bestimmt, indem sie eine Mehrzahl von zukünftigen Schrittwerten unter Verwendung einer Mehrzahl von dynamischen Gleichungen berechnet, die eine Mehrzahl von Subsystemen, den aktuellen Status und die Einschränkungen sowie eine Zielfunktion auf der Grundlage eines Fehlers zwischen einem angeforderten und einem zugeteilten Leistungspegel oder Schub modellieren.

9. Verfahren (300), umfassend:
Bilden einer Schnittstelle (302) zwischen einer Leistungsmanagementsteuerung (190) und einem hybriden Energiespeichersystem (102) und einer oder mehreren Steuerungen (115, 116, 130) eines Elektromotors (110), eines ersten Generators (111) und eines zweiten Generators (132), wobei das hybride Energiespeichersystem mindestens zwei Energiespeichersubsysteme (103) umfasst, die jeweils eine unterschiedliche Leistungs-Energie-Dichte und
Leistungsaufnahmecharakteristiken aufweisen, und der Elektromotor und der erste Generator mit einem Luftfahrzeugtriebwerk (20) einer primären Leistungseinheit gekoppelt sind und der zweite Generator mit einer sekundären Leistungseinheit gekoppelt ist;
Empfangen (304), an der Leistungsmanagementsteuerung, eines Antriebsleistungsbedarfs des Triebwerks für das Luftfahrzeugtriebwerk; und
Durchführen (306) einer modellprädiktiven Regelung, um einen oder mehrere elektrische Leistungsflüsse (120, 122, 124) durch einen bidirektionalen Leistungswandler basierend (114) auf dem Antriebsleistungsbedarf des Triebwerks dynamisch anzupassen und ein prädiktives Leistungsmanagement durchzuführen, indem ein oder mehrere Schütze auf der Grundlage von Lastvorhersagen für den einen oder die mehreren elektrischen Leistungsflüsse (120, 122, 124) vor einer benötigten Leistungsabgabe vorausschauend geschlossen werden, wobei der eine oder die mehreren Schütze eine Schalt- oder Einschwingzeitverzögerung aufweisen, und wobei der bidirektionale Leistungswandler mit dem hybriden Energiespeichersystem (102) und einer oder mehreren Steuerungen (115, 116, 130) des Elektromotors (110), des ersten Generators (111) und des zweiten Generators (132) gekoppelt ist.

10. Verfahren nach Anspruch 9, ferner umfassend:
Erkennen eines oder mehrerer Zustände der mindestens zwei Energiespeichersubsysteme (103); und
Konfigurieren des einen oder der mehreren elektrischen Leistungsflüsse (120, 122, 124) auf der Grundlage des einen oder der mehreren Zustände der mindestens zwei Energiespeichersubsysteme.

11. Verfahren nach Anspruch 10, ferner umfassend:
Konfigurieren mindestens eines des einen oder der mehreren elektrischen Leistungsflüsse (120, 122, 124) von einem ersten Energiespeichersubsystem der mindestens zwei Energiespeichersubsysteme (120, 122, 124), um ein zweites Energiespeichersubsystem der mindestens zwei Energiespeichersubsysteme aufzuladen.

12. Verfahren nach Anspruch 11, wobei das erste Energiespeichersubsystem ein Batteriesystem (106) und ein Batteriemanagementsystem (119) umfasst, das zweite Energiespeichersubsystem einen Super-/Ultrakondensator (104) umfasst und der bidirektionale Leistungswandler (114) mit dem Super-/Ultrakondensator und dem Batteriemanagementsystem wirkgekoppelt ist, optional
wobei das hybride Energiespeichersystem (102) ein drittes Energiespeichersystem umfasst, das einen isolierten Batteriepack (109) umfasst, auf den die Leistungsmanagementsteuerung (190) auf der Grundlage einer Feststellung zugreifen kann, dass ein Betriebsmodus des Luftfahrzeugs ein bodengestützter Betriebsmodus oder ein Notstrom-Betriebsmodus ist.

13. Verfahren nach einem der Ansprüche 9 bis 12, wobei eine Mehrzahl von elektrischen Luftfahrzeugsubsystemen (140) mit dem bidirektionalen Leistungswandler (114) wirkgekoppelt ist und die Leistungsmanagementsteuerung (190) dazu konfiguriert ist, den elektrischen Luftfahrzeugsubsystemen Leistung zu entnehmen oder ihnen Leistung bereitzustellen, und wobei die modellprädiktive Regelung ferner auf einem oder mehreren Leistungsbedarfen von Luftfahrzeugsubsystemen basiert, optional
wobei die elektrischen Luftfahrzeugsubsysteme (140) eines oder mehrere von einem Triebwerkssubsystem (144), einem Niederspannungs-Gleichstromsubsystem (146) eines Luftfahrzeugs, einem Hochspannungs-Gleichstromsubsystem (148) eines Luftfahrzeugs und einem Wechselstromsubsystem (150) eines Luftfahrzeugs umfassen.

14. Verfahren nach Anspruch 13, wobei die Leistungsmanagementsteuerung (190) dazu betreibbar ist, einen Ladezustand des hybriden Energiespeichersystems (102), eine Leistungsanforderung einer Triebwerkssubsystemsteuerung eines Triebwerkssubsystems (144), eine Luftfahrzeugsubsystemsteuerung (156) und die eine oder die mehreren Steuerungen (115, 116, 130) des Elektromotors (110), des ersten Generators (111) und des zweiten Generators (132) zu überwachen.

15. Verfahren nach Anspruch 14, ferner umfassend:
Ermitteln eines aktuellen Status und von Einschränkungen aus der Triebwerkssubsystemsteuerung, der Luftfahrzeugsubsystemsteuerung (156) und der einen oder den mehreren Steuerungen (115, 116, 130) des Elektromotors (110), des ersten Generators (111) und des zweiten Generators (132);
Empfangen des Antriebsleistungsbedarfs des Triebwerks und von Daten von einer Mehrzahl von Triebwerkssensoren;
Ermitteln einer Mehrzahl von Sollwerten für elektrische Leistungspegel; und
Übermitteln der Sollwerte für elektrische Leistungspegel an die Triebwerkssubsystemsteuerung, die Luftfahrzeugsubsystemsteuerung und die eine oder die mehreren Steuerungen des Elektromotors, des ersten Generators und des zweiten Generators, optional
ferner umfassend:
Bestimmen der elektrischen Leistungspegel durch Berechnen einer Mehrzahl von zukünftigen Schrittwerten unter Verwendung einer Mehrzahl von dynamischen Gleichungen, die eine Mehrzahl von Subsystemen, den aktuellen Status und die Einschränkungen, einen historischen Energieverbrauch und eine Zielfunktion auf der Grundlage eines Fehlers zwischen einem angeforderten und einem zugeteilten Leistungspegel oder Schub modellieren.

## Revendications

1. Système d'alimentation (100) d'un aéronef, le système d'alimentation comprenant :
un système de stockage d'énergie hybride (102) comprenant au moins deux sous-systèmes de stockage d'énergie (103) ayant chacun une densité d'alimentation-énergie différente, des caractéristiques d'extraction d'alimentation et/ou une configuration dissemblable ;
une unité d'alimentation primaire comprenant un moteur d'aéronef (20) couplé à un moteur électrique (110) et un premier générateur (111) ;
une unité d'alimentation secondaire (134) couplée à un second générateur (132) ;
un convertisseur d'alimentation bidirectionnel (114) couplé au système de stockage d'énergie hybride et à un ou à plusieurs dispositifs de commande (115, 117, 130) du moteur électrique, du premier générateur et du second générateur ; et
un dispositif de commande de gestion d'alimentation (190) configuré pour s'interfacer avec le système de stockage d'énergie hybride et les un ou plusieurs dispositifs de commande du moteur électrique, du premier générateur et du second générateur, et effectuer une commande prédictive de modèle pour ajuster dynamiquement un ou plusieurs flux d'alimentation électrique (120, 122, 124) à travers le convertisseur d'alimentation bidirectionnel sur la base d'une demande d'alimentation de propulsion de moteur du moteur de l'aéronef et effectuer une gestion d'alimentation prédictive en fermant de manière prédictive un ou plusieurs contacteurs sur la base des prévisions de charge pour les un ou plusieurs flux d'alimentation électrique (120, 122, 124) avant une livraison d'alimentation nécessaire, dans lequel les un ou plusieurs contacteurs ont un délai de commutation ou d'établissement.

2. Système d'alimentation selon la revendication 1, dans lequel le dispositif de commande de gestion d'alimentation (190) est capable de détecter une ou plusieurs conditions des au moins deux sous-systèmes de stockage d'énergie (103) et de configurer les un ou plusieurs flux d'alimentation électrique (120, 122, 124).

3. Système d'alimentation selon la revendication 2, dans lequel le dispositif de commande de gestion d'alimentation (190) est actionnable pour configurer au moins l'un des un ou plusieurs flux d'alimentation électrique (120, 122, 124) provenant d'un premier sous-système de stockage d'énergie des au moins deux sous-systèmes de stockage d'énergie pour charger un second sous-système de stockage d'énergie des au moins deux sous-systèmes de stockage d'énergie (103).

4. Système d'alimentation selon la revendication 3, dans lequel le premier sous-système de stockage d'énergie comprend un système de batterie (106) et un système de gestion de batterie (119), le second sous-système de stockage d'énergie comprend un super/ultracondensateur (104), et le convertisseur d'alimentation bidirectionnel (114) est couplé de manière opérationnelle au super/ultracondensateur et au système de gestion de batterie.

5. Système d'alimentation selon la revendication 3 ou 4, dans lequel le système de stockage d'énergie hybride (102) comprend un troisième système de stockage d'énergie comprenant un bloc-batterie isolé (109) accessible par le dispositif de commande de gestion d'alimentation (190) sur la base de la détermination du fait qu'un mode de fonctionnement de l'aéronef est un mode de fonctionnement au sol ou un mode de fonctionnement sur alimentation de secours.

6. Système d'alimentation selon une quelconque revendication précédente, dans lequel une pluralité de sous-systèmes électriques d'aéronef (140) est couplée de manière opérationnelle au convertisseur d'alimentation bidirectionnel (114) et le dispositif de commande de gestion d'alimentation (190) est configuré pour extraire une alimentation en provenance des sous-systèmes électriques d'aéronef ou pour leur fournir une alimentation, et la commande prédictive de modèle est en outre basée sur une ou plusieurs demandes d'alimentation de sous-système d'aéronef, éventuellement
dans lequel les sous-systèmes électriques d'aéronef comprennent l'un ou plusieurs d'un sous-système moteur (144), d'un sous-système CC basse tension de l'aéronef (146), d'un sous-système CC haute tension de l'aéronef (148) et d'un sous-système CA de l'aéronef (150).

7. Système d'alimentation selon la revendication 6, dans lequel le dispositif de commande de gestion d'alimentation (190) est actionnable pour surveiller un état de charge du système de stockage d'énergie hybride (102), une demande d'alimentation d'une commande de sous-système moteur (154) d'un sous-système moteur (144), une commande de sous-système d'aéronef (156) et les un ou plusieurs dispositifs de commande (115, 116, 130) du moteur électrique (110), du premier générateur (111) et du second générateur (132).

8. Système d'alimentation selon la revendication 7, dans lequel le dispositif de commande de gestion d'alimentation (190) est actionnable pour :
déterminer un état actuel et des contraintes à partir de la commande de sous-système moteur (154), de la commande de sous-système d'aéronef (156) et d'un ou de plusieurs dispositifs de commande (115, 116, 130) du moteur électrique (110), du premier générateur (111) et du second générateur (132) ;
recevoir la demande d'alimentation de propulsion moteur et les données en provenance d'une pluralité de capteurs de moteur ;
déterminer une pluralité de valeurs souhaitées pour les niveaux d'alimentation électrique ; et
communiquer les valeurs souhaitées pour les niveaux d'alimentation électrique à la commande de sous-système moteur, à la commande de sous-système d'aéronef, et les un ou plusieurs dispositifs de commande du moteur électrique, du premier générateur et du second générateur, éventuellement
dans lequel la commande prédictive de modèle détermine les niveaux d'alimentation électrique en calculant une pluralité de valeurs d'étape futures à l'aide d'une pluralité d'équations dynamiques qui modélisent une pluralité de sous-systèmes, l'état actuel et les contraintes, et une fonction objective sur la base d'une erreur entre un niveau d'alimentation ou de poussée demandé et un niveau d'alimentation ou de poussée alloué.

9. Procédé (300) comprenant :
l'interfaçage (302) d'un dispositif de commande de gestion d'alimentation (190) avec un système de stockage d'énergie hybride (102) et d'un ou de plusieurs dispositifs de commande (115, 116, 130) d'un moteur électrique (110), d'un premier générateur (111) et d'un second générateur (132), dans lequel le système de stockage d'énergie hybride comprend au moins deux sous-systèmes de stockage d'énergie (103) ayant chacun des caractéristiques différentes en matière de densité d'alimentation-énergie ainsi que d'extraction d'alimentation, et le moteur électrique, et le premier générateur sont couplés à un moteur d'aéronef (20) d'une unité d'alimentation primaire et le second générateur est couplé à une unité d'alimentation secondaire ;
la réception, (304) au niveau du dispositif de commande de gestion d'alimentation, d'une demande d'alimentation de propulsion de moteur pour le moteur d'aéronef ; et
la réalisation (306) d'une commande prédictive par modèle pour ajuster dynamiquement un ou plusieurs flux d'alimentation électrique (120, 122, 124) à travers un convertisseur d'alimentation bidirectionnel (114) sur la base de la demande d'alimentation de propulsion de moteur, et effectuer une gestion d'alimentation prédictive en fermant de manière prédictive un ou plusieurs contacteurs sur la base de prévisions de charge pour les un ou plusieurs flux d'alimentation électrique (120, 122, 124) avant une fourniture d'alimentation requise, dans lequel les un ou plusieurs contacteurs ont un temps de retard de commutation ou de stabilisation, et dans lequel le convertisseur d'alimentation bidirectionnel est couplé au système de stockage d'énergie hybride (102) et à un ou à plusieurs dispositifs de commande (115, 116, 130) du moteur électrique (110), du premier générateur (111) et du second générateur (132).

10. Procédé selon la revendication 9, comprenant en outre :
la détection d'une ou de plusieurs conditions des au moins deux sous-systèmes de stockage d'énergie (103) ; et
la configuration des un ou plusieurs flux d'alimentation électrique (120, 122, 124) sur la base des une ou plusieurs conditions des au moins deux sous-systèmes de stockage d'énergie.

11. Procédé selon la revendication 10, comprenant en outre :
la configuration d'au moins l'un des un ou plusieurs flux d'alimentation électrique (120, 122, 124) provenant d'un premier sous-système de stockage d'énergie des au moins deux sous-systèmes de stockage d'énergie (120, 122, 124) pour charger un second sous-système de stockage d'énergie des au moins deux sous-systèmes de stockage d'énergie.

12. Procédé selon la revendication 11, dans lequel le premier sous-système de stockage d'énergie comprend un système de batterie (106) et un système de gestion de batterie (119), le second sous-système de stockage d'énergie comprend un super/ultracondensateur (104), et le convertisseur d'alimentation bidirectionnel (114) est couplé de manière opérationnelle au super/ultracondensateur et au système de gestion de batterie, éventuellement
dans lequel le système de stockage d'énergie hybride (102) comprend un troisième système de stockage d'énergie comprenant un bloc-batterie isolé (109) accessible par le dispositif de commande de gestion d'alimentation (190) sur la base de la détermination du fait qu'un mode de fonctionnement de l'aéronef est un mode de fonctionnement au sol ou un mode de fonctionnement sur alimentation de secours.

13. Procédé selon l'une quelconque des revendications 9 à 12, dans lequel une pluralité de sous-systèmes électriques d'aéronef (140) est couplée de manière opérationnelle au convertisseur d'alimentation bidirectionnel (114) et le dispositif de commande de gestion d'alimentation (190) est configuré pour extraire une alimentation en provenance des sous-systèmes électriques d'aéronef ou pour leur fournir une alimentation, et la commande prédictive de modèle est en outre basée sur une ou plusieurs demandes d'alimentation de sous-système d'aéronef, éventuellement
dans lequel les sous-systèmes électriques d'aéronef (140) comprennent l'un ou plusieurs d'un sous-système moteur (144), d'un sous-système CC basse tension d'aéronef (146), d'un sous-système CC haute tension d'aéronef (148) et d'un sous-système CA d'aéronef (150).

14. Procédé selon la revendication 13, dans lequel le dispositif de commande de gestion d'alimentation (190) est actionnable pour surveiller un état de charge du système de stockage d'énergie hybride (102), une demande d'alimentation d'une commande de sous-système moteur d'un sous-système moteur (144), une commande de sous-système d'aéronef (156) et les un ou plusieurs dispositifs de commande (115, 116, 130) du moteur électrique (110), du premier générateur (111) et du second générateur (132).

15. Procédé selon la revendication 14, comprenant en outre :
la détermination d'un état actuel et des contraintes à partir de la commande de sous-système moteur, de la commande de sous-système d'aéronef (156) et d'un ou de plusieurs dispositifs de commande (115, 116, 130) du moteur électrique (110), du premier générateur (111) et du second générateur (132) ;
la réception de la demande d'alimentation de propulsion moteur et des données en provenance d'une pluralité de capteurs de moteur ;
la détermination d'une pluralité de valeurs souhaitées pour les niveaux d'alimentation électrique ; et
la communication des valeurs souhaitées pour les niveaux d'alimentation électrique à la commande de sous-système moteur, à la commande de sous-système d'aéronef, et aux un ou plusieurs dispositifs de commande du moteur électrique, du premier générateur et du second générateur, éventuellement
comprenant en outre :
la détermination des niveaux d'alimentation électrique en calculant une pluralité de valeurs d'étape futures à l'aide d'une pluralité d'équations dynamiques qui modélisent une pluralité de sous-systèmes, l'état actuel et les contraintes, une consommation d'énergie historique et une fonction objective sur la base d'une erreur entre un niveau d'alimentation ou de poussée demandé et un niveau d'alimentation ou de poussée alloué.
